Europäisches Patentamt

European Patent Office

Office européen des brevets

(11) Publication number: **0 422 743 A1**

# EUROPEAN PATENT APPLICATION

(21) Application number: 90202714.3

(22) Date of filing: 12.10.90

(51) Int. Cl.⁵: **A01B 59/048**, A01D 67/00, A01D 43/10

(30) Priority: 12.10.89 NL 8902527

(43) Date of publication of application:
17.04.91 Bulletin 91/16

(84) Designated Contracting States:
DE FR GB NL

(71) Applicant: **C. van der Lely N.V.**
**Weverskade 10 P.O. Box 26**
**NL-3155 ZG Maasland(NL)**

(72) Inventor: **Sikkema, Sape**
**12 Paul Krugerstraat**
**NL-3143 CP Maassluis(NL)**

(74) Representative: **Mulder, Herman et al**
**Octrooibureau Van der Lely N.V. Weverskade**
**10 P.O. Box 26**
**NL-3155 ZG Maasland(NL)**

(54) **An agricultural machine.**

(57) An agricultural machine has a frame (1) for connecting a machine (2) performing one or more agricultural operations to a lifting hitch of a tractor. The frame (1) includes a coupling element (3) to engage the lifting hitch and a machine carrier frame (4) which by means of a quadrangular pivotal structure (5) is arranged such that it is capable of pivoting in the upward and downward direction relative to the coupling element (3).

The quadrangular pivotal structure (5) includes an upper supporting beam (6) and a lower supporting beam (7), whereby the upper supporting beam (6) diverges relative to the lower supporting beams (7) in the forward direction. Furthermore locking means are provided for fixing, in the working position of the machine, the position of the carrier frame (4) with respect to the coupling element (3). Using this embodiment, the lifting height of the carrier frame (4) can be increased without the lifting hitch of the tractor being used.

FIG.7

# AN AGRICULTURAL MACHINE

The invention relates to an agricultural machine having a frame for connecting a machine performing one or more agricultural operations, such as e.g. a mowing machine or a mower-crusher, to a lifting hitch of a tractor, which frame includes a coupling element to engage the lifting hitch of the tractor and a machine carrier frame which by means of a quadrangular pivotal structure is arranged such that it is capable of pivoting relative to the coupling element in a direction extending in a substantially vertical plane.

An agricultural machine of this type is disclosed in Dutch patent application No. 8801040. In the frame known from said patent application, the quadrangular pivotal structure is in the form of a parallelogram pivotal structure. In the working position of the machine, the position of the machine carrier frame relative to the lifting hitch is variable within a certain range with respect to a preset position of the carrier frame, whilst, in addition, weight relief springs are provided, so that the machine can follow unevennesses in the soil surface and can be moved easily over stones and other obstacles. When, in the working position, the machine must interrupt its action without being decoupled, e.g. on turning at the head ends of a field, the carrier frame can be lifted by means of operating cylinders forming part thereof to a work interrupting position defined by stops, without the lifting hitch of the tractor being used. In a concrete embodiment of this prior art machine, it is possible to obtain in this manner a lifting height of the carrier frame in which the machine is lifted to approximately 30 cms above the soil surface, which, particularly when the machine is driven at the head ends of a field during operation, may be too low. This limited lifting height, which occurs when the lifting function of the lifting hitch of the tractor is taken over by the carrier frame with associated operating cylinders, may be due to the fact that the coupling element is arranged at such a height that the lifting hitch of the tractor, when the machine is in operation, is more or less in its highest position already. This situation may occur when the machine is front-mounted closely to the tractor.

Therefore, it is the object of the invention to provide an agricultural machine of the above-defined type, in which the lifting height of the carrier frame can be increased without the necessity of using the lifting hitch of the tractor.

According to the invention, the agricultural machine is characterized in that the quadrangular pivotal structure includes an upper supporting beam which from the coupling element diverges relative to the lower supporting beams of the quadrangular pivotal structure in the direction towards the carrier frame, and that there are provided locking means for fixing, in the working position of the machine, the position of the carrier frame with respect to the coupling element.

The first measure in accordance with the invention does indeed increase the lifting height, but it has the disadvantage that, when the lifting hitch of the tractor is lowered from the working position with the object of decoupling the machine from the tractor, the machine assumes an unwanted oblique position, in which its lower end is pivoted forwardly and upwardly relative to the soil surface. The force exercised by the machine in that oblique position on the lifting hitch renders the decoupling operation highly difficult, while, when the machine is in the decoupled state, it tilts through a given angle so as to assume a stable position, which more or less corresponds to the position of the machine in the working position. As a result, the position of the coupling element is altered such that a recoupling of the machine to the lifting hitch of the tractor is impeded; more specifically, a special adjustment of the top rod of the lifting hitch will be required for this coupling operation. These problems are obviated by the second measure in accordance with the invention.

In a specific embodiment of the invention, the locking means can fix the position of the lower supporting beams with respect to the coupling element in the operating position of the machine. In this specific embodiment there may furthermore be provided in the pivot point of each of the lower supporting beams with respect to the coupling element a supporting element which is also capable of pivoting relative to this coupling element, an operating cylinder being provided between each of the lower supporting beams and a relevant supporting element. In the working position of the machine, the lower supporting beams and the supporting elements can be adjusted by means of the operating cylinder into a position wherein at least the lower supporting beams are located at a given angular spacing from stops which are in a fixed relationship relative to the coupling element, while in the work interrupting position of the machine the lower supporting beams and the supporting elements can be pulled upwardly with the aid of the operating cylinders against stops which are in a fixed position with respect to the coupling element.

In a special embodiment of the invention, the locking means include a locking hook to fix the angular position of a lower supporting beam with respect to the coupling element, in the working position of the machine. Preferably, the locking hook fixes the angular position between a lower supporting beam and a stop which is in a fixed position with respect to the coupling element. This renders it possible, particularly on decoupling of the machine, to keep the position of the carrier frame equal to the preset position assumed by this carrier frame in the working position.

In addition, in accordance with the invention, the locking hook can be attached in a point defined with respect to a lower supporting beam and remote from the pivot point of the lower supporting beam relative to the coupling element. More specifically, the locking hook may be arranged pivotably in that point where the operating cylinder is attached pivotably to a relevant lower supporting beam. Hereby it is possible to obtain a simple and efficient locking of the angular position between a lower supporting beam and a stop which is in a fixed position relative to the coupling element.

Also in accordance with the invention, the locking hook may be adjustable to a plurality of, more particularly three, positions relative to the operating cylinder. The operating cylinder may have a raised portion and can then be locked in the work interrupting position by inserting a pin through a first hole in the locking hook and behind the raised portion. The locking hook will then be located in the longitudinal direction of the operating cylinder. In the working position, the locking hook will also extend in the longitudinal direction of the operating cylinder; in this position, the position of the locking hook can be locked with the aid of a supporting plate at the lower side of the locking hook and a pin to be inserted through a second hole in the locking hook above the operating cylinder. The operating cylinder itself continues to be movable between then supporting plate and the pin inserted through the second hole. Furthermore, in the position wherein the locking hook fixes the angular position between a lower supporting beam and a stop which is in a fixed position relative to the coupling element, the locking hook can be fixed with respect to the operating cylinder by means of a pin to be inserted through a third hole provided at a higher level than the second hole in the locking hook above the operating cylinder.

For a better understanding of the present invention and to show how the same may be carried into effect, reference will now be made, by way of example, to the accompanying drawing, wherein:

Figure 1 is a schematic representation of a mower-crusher suspended in a frame and shown in the work interrupting position, the quadrangular pivotal structure being shown both as a parallelogram and as an irregular quadrangle;

Figure 2 is a schematic representation of a mower-crusher suspended in a frame and shown in the working position, the quadrangular pivotal structure being shown both as a parallelogram and as an irregular quadrangle;

Figure 3 is a schematic representation of a mower-crusher suspended in a frame and shown both in the working position and in the position assumed for decoupling from the lifting hitch of the tractor, the quadrangular pivotal structure being shown in the form of a parallelogram;

Figure 4 is a schematic representation of a mower-crusher suspended in a frame and shown both in the working position and in the position assumed for decoupling from the lifting hitch of the tractor, the quadrangular pivotal structure being shown as an irregular quadrangle;

Figure 5 is a schematic representation of a mower-crusher suspended in a frame and shown in the position assumed for decoupling from the lifting hitch of the tractor as well as in the position assumed after decoupling from the lifting hitch of the tractor, the quadrangular pivotal structure being shown in the form of an irregular quadrangle;

Figure 6 is a schematic representation of a mower-crusher suspended in a frame and shown in the locked position as well as in the position assumed after decoupling from the lifting hitch of the tractor, the quadrangular pivotal structure being shown in the form of an irregular quadrangle;

Figure 7 is an elevational view of the agricultural machine according to the invention;

Figure 8 is a plan view of the agricultural machine according to the invention;

Figure 9 is a front view of the agricultural machine according to the invention;

Figure 10 shows the locking hook of the invention in the work interrupting position;

Figure 11 shows the locking hook of the invention in the working position;

Figure 12 shows the locking hook of the invention in the position wherein it locks the position of the carrier frame in the operating position.

In the drawings, corresponding parts have been denoted by identical reference numerals.

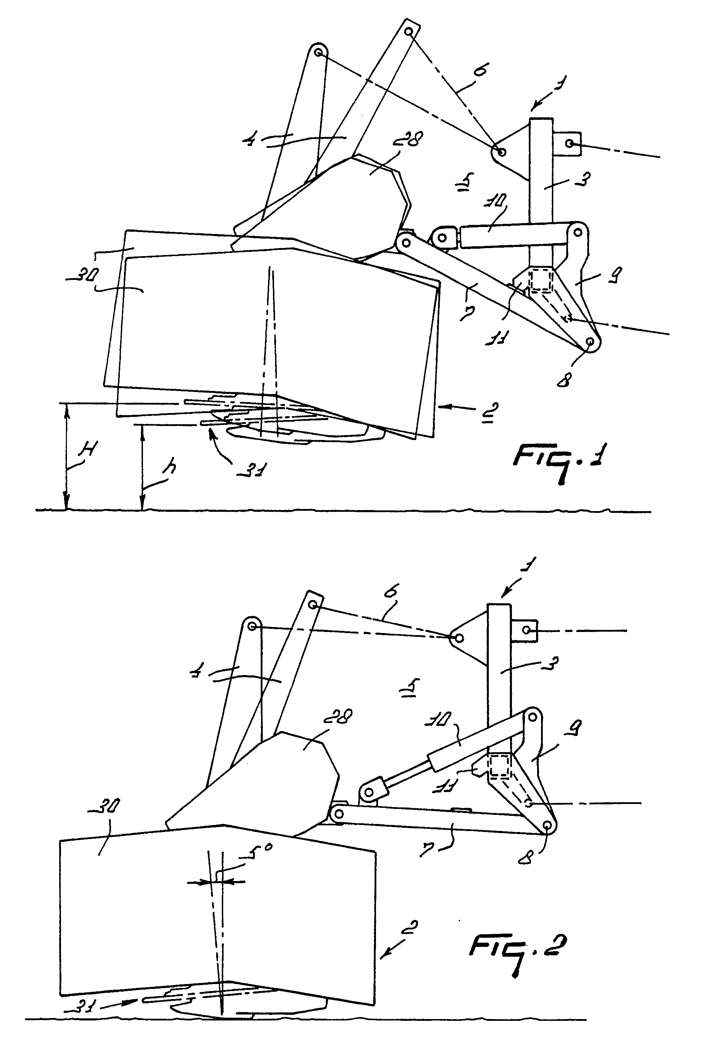

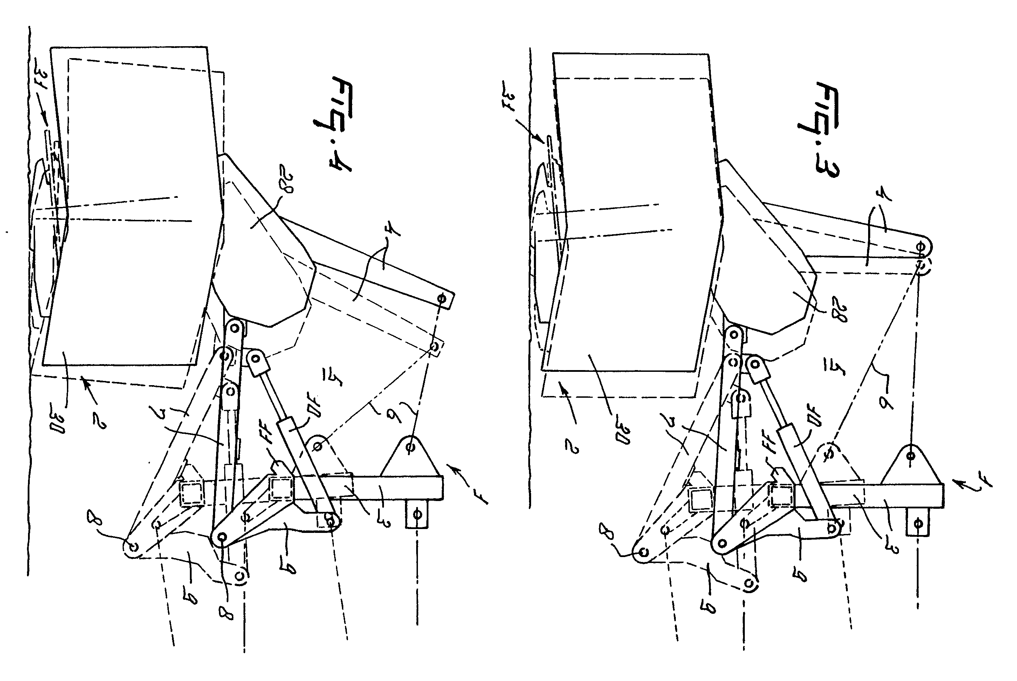

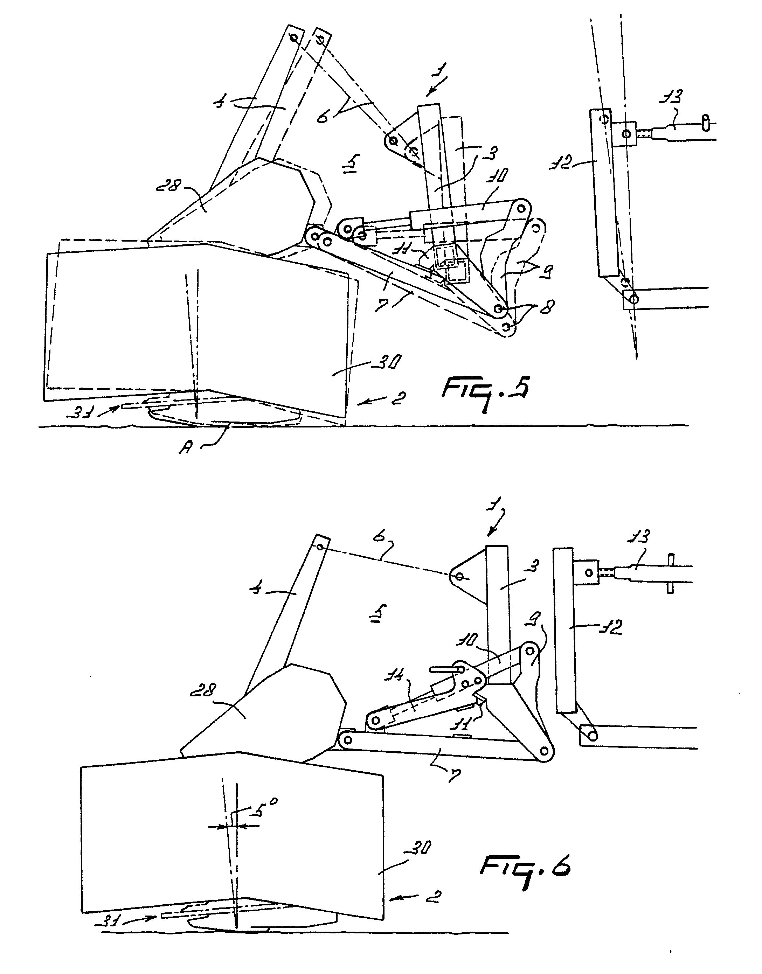

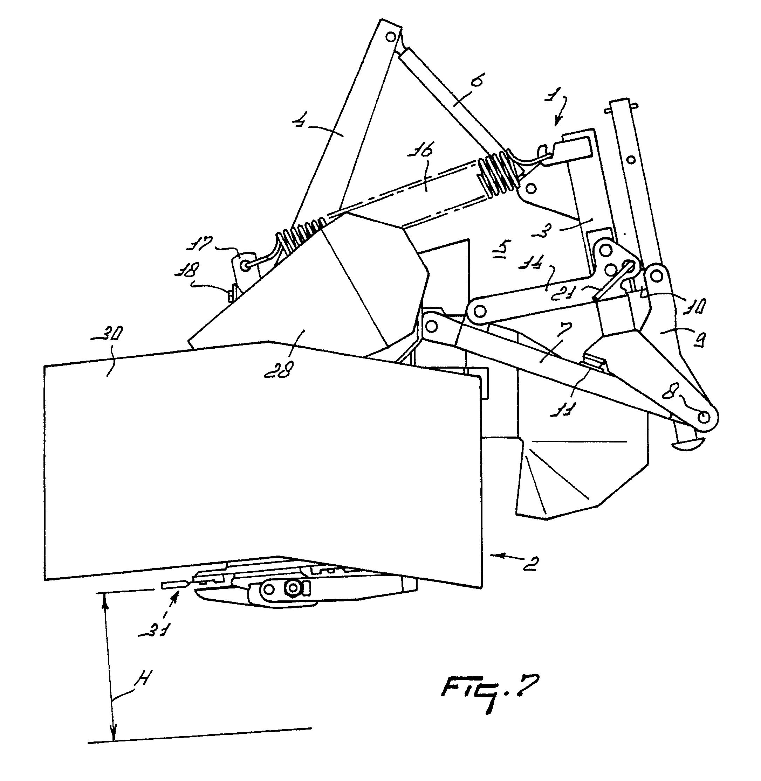

Prior to giving a description of a concrete embodiment of the agricultural machine of the invention with reference to Figures 7 to 12, the invention will first be described with reference to the schematic arrangements shown in Figures 1 to 6.

In Figures 1 to 6, the frame to be coupled to the lifting hitch of a tractor is denoted by the reference numeral 1. A machine performing one or more agricultural operations, i.e. a mower-crusher 2 in the drawings, is attached to this frame. The frame 1 includes a coupling element 3 to engage the lifting hitch of the tractor and a machine carrier frame 4 which by means of a quadrangular pivotal structure 5 is arranged such that it is capable of pivoting relative to the coupling element 3 in a direction extending in a substantially vertical plane, i.e. the plane of the drawing in Figures 1 to 6. In Dutch patent application 8801040, mentioned in the preamble of the description as the prior art, the quadrangular pivotal structure 5 is in the form of a parallelogram, while the quadrangular pivotal structure 5 of the invention is in the form of an irregular quadrangle, the upper supporting beam 6 (shown in Figures 1 to 6 by a dash-dot line only) of the quadrangular pivotal structure 5 diverging from the coupling element 3 relative to the lower supporting beams 7 of the quadrangular pivotal structure 5 in the direction towards the carrier frame 4. In the sequel of this description, the pivotal structure 5 according to the invention will be denoted as an "irregular quadrangular pivotal structure". In the pivot point 8 of each of the lower supporting beams 7 relative to the coupling element 3, there is provided a supporting element 9 which is also pivotable with respect to the coupling element 3, while an operating cylinder 10 is included between each of the lower supporting beams 7 and a relevant supporting element 9.

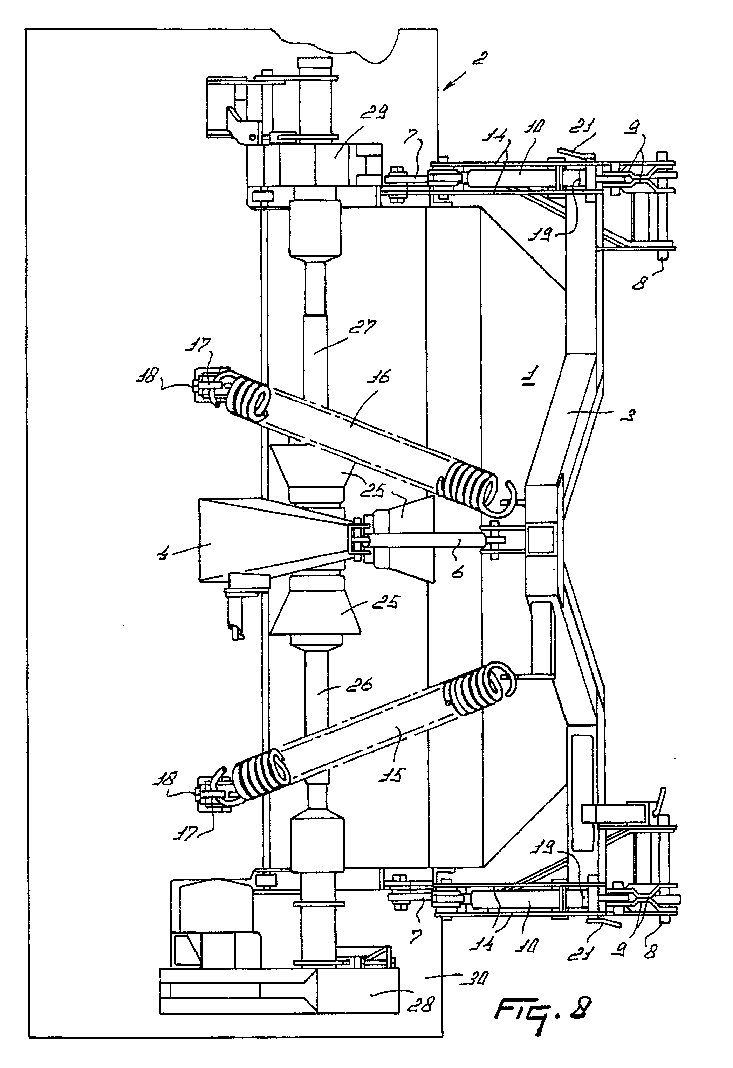

In the working position shown in Figure 2, the mower-crusher bears on the soil at an operative angle of approximately 5°. The position of the machine carrier frame 4 is such that, with respect to the coupling element 3, in the parallelogram pivotal structure the position of the mower-crusher is the same as in the irregular quadrangular pivotal structure. In this working position, the lower supporting beams 7 are located at a given angular distance from stops 11 which are in a fixed position relative to the coupling element 3. The triangular pivotal construction, formed by a lower supporting beam 7, a supporting element 9 and an operating cylinder 10, is capable of pivoting as an integral whole about the pivot point 8. This triangular pivotal construction can pivot that far about the point 8 - clockwise in the Figures - until the lower supporting beam 7 engages the stop 11; this situation will occur when the mower-crusher travels over a ridge on the soil surface. As in the embodiment shown the supporting element 9 already bears by means of a stopping surface on the coupling element 3, the lower supporting beam can pivot - counterclockwise in the Figures - about the point 8 under the influence of the weight of the mower-crusher, whereby the operating cylinder is extended; this situation will occur when the mower-crusher travels over a recess in the soil surface. In the working position, the triangular pivotal construction can alternatively be adjusted such that it can pivot in both directions about the point 8 until the lower supporting beam 7 or the supporting element 9, respectively, is moved against a stop which is in a fixed position relative to the coupling element 3. In the working position shown here, the coupling element 3 is shown in a vertical position; in practice, the coupling element may be in a slightly tilted position, as is shown in Figures 7 to 9. However, it is of importance for the trestle coupled to the lifting hitch of the tractor to be in the same position, in order that with the aid thereof the coupling element 3 and hence the agricultural machine can be seized.

When a switch is made from the working position to the work interrupting position as shown in Figure 1, the position of the lifting hitch of the tractor and hence that of the coupling element 3 remain unchanged. However, by means of the operating cylinders 10 both the lower supporting beams 7 and the supporting elements 9 are pulled against the relevant stops which are in a fixed position relative to the coupling element 3. Using the parallelogram pivotal structure, the mower-crusher is then raised vertically to a height $\underline{h}$. By using an irregular quadrangular pivotal structure, the mower-crusher can be lifted through a larger distance $\underline{H}$, the spatial position of the machine being changed thereby. the lower end of the machine then moves forwardly and upwardly.

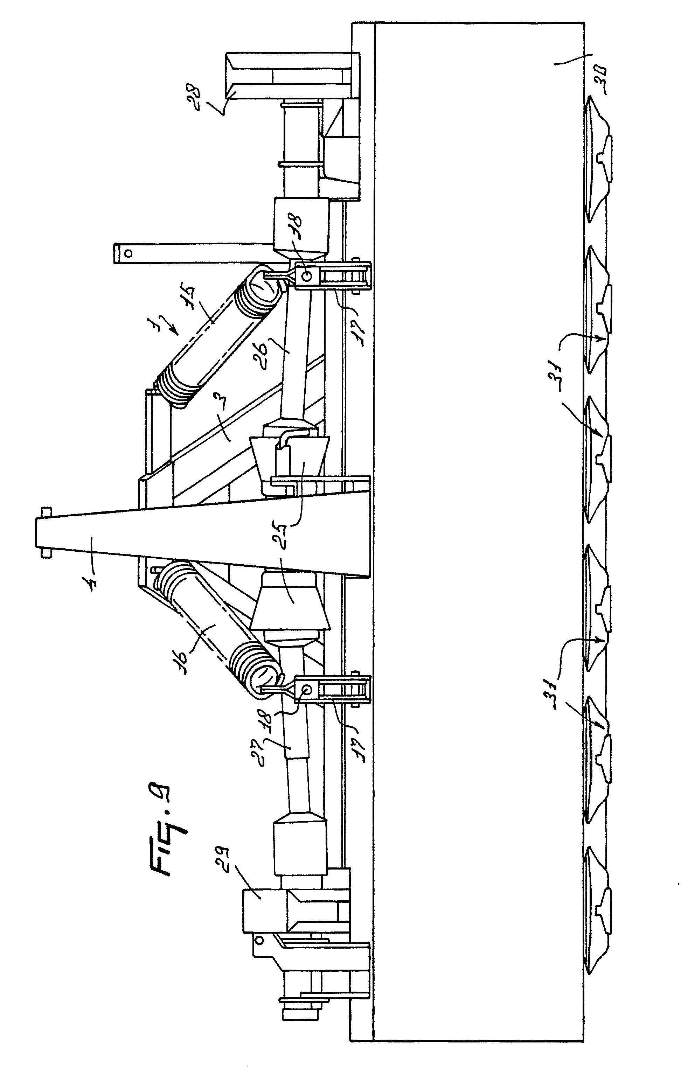

When the machine is to be decoupled, then, starting from the working position, the lifting hitch of the machine and hence the coupling element 3 are moved downwardly until the lower supporting beams 7 contact the relevant stops 11. By moving the lifting hitch further downwardly, the trestle attached thereto can get loose from the coupling element 3 and the machine can arrive in the decoupled state. Figures 3 and 4 show the working position of the coupling element 3, the position assumed by the coupling element 3 for decoupling of the machine, the quadrangular pivotal structure 5 and the carrier frame 4 cum machine 2. Figure 3 shows the two positions for a parallelogram pivotal structure: then, on moving downwardly of the coupling element 3, there hardly occurs any change in the position of the machine 2, the machine being moved only slightly towards the tractor. However, when the irregular quadrangular pivotal structure 5 is used (see Figure 4), the, on downward movement of the coupling element 3, the carrier frame 4 cum machine 2 are slightly tilted, the lower end being moved forwardly and downwardly. The angle through which the machine tilts can be as high as in the order of 10°. In this unstalbe position, the machine exercises such a force on the coupling element 3 that, on further downwards movement of the lifting hitch, it is very difficult for the trestle attached thereto to be released from the coupling element 3.

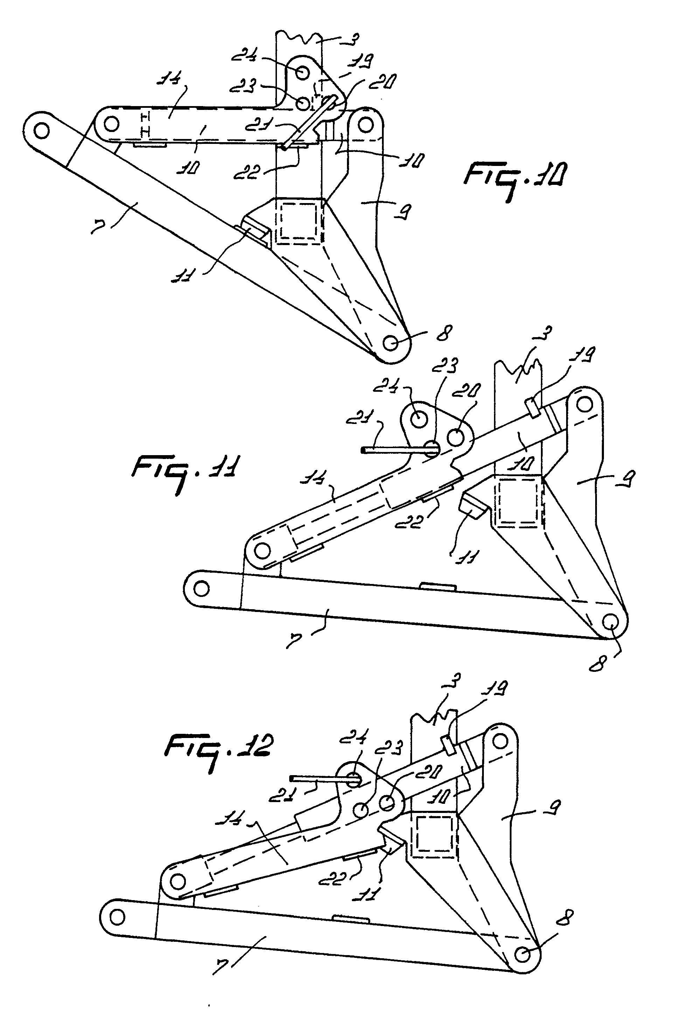

However, as soon as it has been decoupled from the lifting hitch of the tractor, the machine will pivot from its unstable position assumed on decoupling through the said angle of tilt to its stable position; these two situations are illustrated in Figure 5. The machine will then pivot about a point A . As a result, however, the position of the coupling element 3 is changed as well; the coupling element 3 pivots through the said angle of tilt. Consequently, the position of the coupling element 3 no longer corresponds to that of the trestle 12 attached to the lifting hitch of the tractor (see Figure 5). In particular for coupling of the machine, it will then be necessary to extend the top rod 13 of the lifting hitch of the tractor, while after the coupling this top rod must be returned again to its original position. These additional operations are experienced as being disadvantageous in practice. Hence, in accordance with the invention, there are provided locking means for fixing, in the working position of the machine, the position of the carrier frame with respect to the coupling element. In Figurge 6, these locking means comprise a locking hook 14 for fixing, in the working position of the machine, the angular position of a lower supporting beam 7 with respect to the coupling element 3; in particular, the locking hook 14 fixes the angular position between a lower supporting beam 7 and a stop 11 which is in a fixed position relative to the coupling element. From the working position, the coupling element 3 is lifted somewhat by means of the lifting hitch of the tractor in order to bring the locking hook 14 from its inoperative position to the operative position as shown in Figure 6. By lowering the lifting hitch again, the locking hook 14 engages the stop 11, more particularly in such a manner that the triangular pivotal structure 7, 9, 10 is positioned in the same manner as in the working position of the machine. The mode of operation of the locking hook will be returned to hereinafter. By maintaining the position of the machine in the working position, it will be possible to decouple the machine from the tractor by lowering the lifting hitch of the tractor, without the machine being moved from its stable position. Therefore, in the decoupled state, the position of the coupling element 3 will be such that, without additional measures, the trestle 12 attached to the lifting hitch can directly engage same with the object of coupling the machine to the tractor again.

Figures 7 to 9 show a concrete embodiment of a mower-crusher 2 suspended in a frame 1. In the same manner as has been described in the foregoing with reference to Figures 1 to 6, the frame 1 comprises a coupling element 3 to engage the lifting hitch of the tractor, an irregular quadrangular pivotal structure 5 having an upper supporting beam 6 and lower supporting beams 7, and a machine carrier frame 4 which by means of the irregular quadrangular pivotal structure is arranged such that it is capable of pivoting relative to the coupling element 3 in a direction extending in a substantially vertical plane. In this concrete embodiment, the movability of the carrier frame 4 relative to the coupling element can be obtained again with the aid of triangular pivotal structures, each of which is comprised of a lower supporting arm 7, a supporting element 9 and an operating cylinder 10. The operating cylinders 10 may be of such a design that they can be operated pneumatically, hydraulically or electrically.

Between the coupling element 3 and the carrier frame 4 there are arranged two weight relief springs 15 and 16, the tension of which can be adjusted by means of an adjusting bolt 18 that co-operates with a spring connecting element 17. These weight relief springs are disposed on either side of the centre of gravity of the mover-crusher, the frame included. From Figures 8 and 9 it is apparent that this centre of gravity does not coincide with the machine centre; the weight relief springs are provided asymmetrically with respect to the machine centre.

As has been stated already in the foregoing, a mower-crusher 2 is attached to the carrier frame 4; in the embodiment shown here, the mower-crusher is front-mounted on the tractor using the frame and the lifting hitch of the agricultural tractor as described in the foregoing. In order to minimize the load of the frame, the mower-crusher must be connected to the tractor as closely as possible thereto; therefore, the coupling element 3 is disposed relatively high and as closely as possible to the carrier frame 4. However, in order to obtain a substantially constant weight relief within a given range of pivotal movement of the lower supporting beams 7, the length of the lower carrier beams 7 must not be chosen too short; hence, the pivot shafts 8 are disposed behind the coupling element 3.

Figure 7 shows the mower-crusher 2 in the work interrupting position, the machine 2 being lifted from the soil.

When, in the working condition, the mowing operation is to be interrupted without the mower-crusher having been decoupled, then the operating cylinders 10 will be energized and the lower supporting beams 7 will be pulled upwardly about the pivot shafts 8, as a result of which the carrier frame 4 moves upwardly, with a slight tilt, until the lower supporting beams 7 and the supporting elements 9 are stopped by the relevant stops. Consequently, the lifting is effected by the operating cylinders 10 of the frame 1 instead of by the top rod 13 of the lifting hitch. This transfer of the lifting function is necessary when the coupling element 3 is arranged in such a high position that, when the mower-crusher 2 is operative, the lifting hitch is more or less in its highest position already. In the work interrupting position as shown here, the lower supporting beams extend obliquely upwardly and forwardly and bear against the stop 11 which is in a fixed position relative to the coupling element 3. When thereafter the mower-crusher 2 should be adjusted to the working position, then the carrier frame 4 is adjusted by means of the operating cylinders 10 to the state wherein the machine 1 does indeed still bear on the soil, but wherein the weight relief springs 15 and 16 provide the desired weight relief. In this situation, the lower supporting beams 7 are adjusted to a predetermined angular position relative to the stops 11. When, during operation, the mower-crusher 2 is moved across the field, then, partly because of the weight relief springs 15 and 16, it is pushed easily over all sorts of unevennesses. The mower-crusher 2 can then be moved freely in an approximately vertical direction through a range which is determined by the operating cylinders 10 and the stops of the lower supporting beams 7 and of the supporting elements 9 against the coupling element 3, In a concrete embodiment, in the working position, the lower supporting beams 7 are adjusted to an obliquely upwardly and forwardly extending angle of approximately $4^\circ$ relative to a horizontal plane. When, during operation, the mower-crusher 2 is moved over unevennesses, the lower supporting beams 7 pivot about the pivot shafts 8 through an obliquely upwardly and forwardly extending angle which can vary from approximately $0^\circ$ to approximately $+30^\circ$ with respect to a horizontal plane. By adjusting the operating cylinders 10 differently, this range can be chosen differently and, consequently, also that of the mower-crusher 2 in approximately the vertical direction.

The irregular quadrangular pivotal structure 5 and the weight relief springs 15 and 16 are arranged such relative to each other and are dimensioned such that, due to the range of pivotal movement of the carrier frame 4 as determined by the triangular pivotal structure 7, 9, 10, there is provided a substantially constant weight relief of the mower crusher 2. In view of the position of the coupling element 3 as closely as possible to the mower-crusher 2 and the length of the respective lower and upper supporting beams 6 and 7 of the irregular quadrangular pivotal structure, the weight relief is furthermore in substance determined by the angle between the lower supporting beams 7 and the horizontal plane. When, during operation, the angle through which the lower supporting beams 7 extend can vary through a range of $30^\circ$, which range is contained in an interval of from approximately $-15^\circ$ to $+30^\circ$ relative to a horizon-

tal plane, then the value of the weight relief of the mower-crusher will vary maximally 10%. As has already been stated in the foregoing, in the adjusted position the lower supporting beams 7 extend in a concrete embodiment through an angle of $+4^\circ$ relative to the horizontal plane, whilst, when the mower-crusher 2 is moved, they can pivot through an angle of from approximately $0^\circ$ to $+30^\circ$ relative to the horizontal plane. The angle at which, during operation, the weight relief springs extend obliquely downwardly and forwardly can vary from approximately $+40^\circ$ to $+15^\circ$ relative to a horizontal plane when the angle of the lower supporting beams 7 varies from approximately $-15^\circ$ to $+30^\circ$, whilst the said angle of the weight relief springs 15 and 16 can vary from approximately $+30^\circ$ to $+15^\circ$ when the said angle of the lower supporting beams 7 varies from approximately $0^\circ$ to $+30^\circ$.

In order to decouple the mower-crusher 2 from the working position, first the position of the carrier frame 4 and hence that of the mower-crusher 2 is fixed relative to the coupling element 3. The locking hook 14 is used for this purpose. The locking hook 14 fixes, in the working position of the machine, the angular position of a lower supporting beam 7 relative to the coupling element 3: in particular, this locking hook fixes the angular position between a lower supporting beam 7 and a stop 11 which is in a fixed position relative to the coupling element. The locking hook 14 is attached in a point defined with respect to a lower supporting beam 7 at a distance from the pivot point 8 of the lower supporting beam 7 relative to the coupling element; particularly, the locking hook 14 is provided pivotably in the point where the operating cylinder 10 is connected pivotably to a relevant lower supporting beam 7. With respect to the operating cylinder 10, the locking hook 14 is adjustable to a plurality of positions, more specifically to three positions (see Figures 10, 11 and 12). The one end of the operating cylinders 10 is provided with a raised portion 19 and, in the work interrupting position, can be secured by means of a pin 21 to be inserted through a first hole 20 in the locking hook 14 and behing the said raised portion 19 (see Figure 10). The locking hook 14 is connected to the other end of the operating cylinder 10, extends substantially in the longitudinal direction thereof and locks same in such a way that no change in length thereof is possible in the work interrupting posi tion. Both the lower supporting beam 7 and the supporting element 9 are pulled up against relevant stops which are in a fixed position with respect to the coupling element 3. Also in the working position, the locking hook 14 extends in the longitudinal direction of the operating cylinder 10; in this position, the locking hook 14 is fixed by means of a supporting plate 22 provided at its bottom side and the pin 21 to be inserted through a second hole 23 therin above the operating cylinder 10. In this position as shown in Figure 11, the length of the operating cylinder 10 can be varied between the supporting plate 22 and the pin 21. The fact that for the work interrupting position and the working position separate apertures 20 and 23, respectively, are provided in the locking hook 14, is connected with the construction used here; it is obvious that this construction can be adapted such that the same hole in the locking hook may be used for both the work interrupting position and the working position. In the position wherein the locking hook 14 fixes the angular position between a lower supporting beam 7 and a stop 11 which is in a fixed position relative to the coupling element 3, more specifically in the position wherein the preset working position is fixed, the locking hook 14 can be secured relative to the operating cylinder 10 by means of the pin 21 to be inserted through a third hole 24 therin above the operating cylinder 10. This third hole 24 is provided in the locking hook 14 at a higher position than the aforementioned holes, in order that the locking hook 14 can pivot downwardly so far relative to its point of attachment to the lower supporting beam 7 that its end can catch around the stop 11, the locking hook 14 being in a position relative to the lower supporting beam 7 that corresponds to the working position. In order to ensure that the locking hook 14 catches around the stop 11, the lifting hitch must first move the coupling element upwardly to provide that the locking hook can move downwardly, whereafter, after the coupling element is moved downwardly again by means of the lifting hitch, the stop 11 can be caught by the locking hook 14.

The carrier frame 4 includes a transmission box 25, of which the input shaft is connected to the power take-off shaft of the tractor via e.g. a flexible coupling and the output shafts 26 and 27 serve to drive the mowing unit and the crusher implement, respectively, of the mower-crusher 2. At one side, the carrier frame 4 has a first transmission unit 28 which transfers the movement of the output shaft 26 to the mowing unit. In addition, the other side of the carrier frame 4 has a second transmission unit 29 which transfers the movement of the output shaft 27 to the crusher implement. The mowing unit and the crusher implement of the mower-crusher themselves are of no importance to the present invention; they are not separately shown in Figures 7 to 9, but are located under a mower hood 30. In Figures 7 and 9 there are shown only six mowing elements 31 forming part of the (non-shown) mowing unit.

## Claims

1. An agricultural machine having a frame (1) for connecting a machine performing one or more agricultural operations, such as e.g. a mowing machine or a mower-crusher (2), to a lifting hitch of a tractor, which frame (1) includes a coupling element (3) to engage the lifting hitch of the tractor and a machine carrier frame (4) which by means of a quadrangular pivotal structure (5) is arranged such that it is capable of pivoting relative to the coupling element (3) in a direction extending in a substantially vertical plane, characterized in that the quadrangular pivotal structure (5) includes an upper supporting beam (6) which from the coupling element (3) diverges relative to the lower supporting beams (7) of the quadrangular pivotal structure (5) in the direction towards the carrier frame (4), and that there are provided locking means for fixing, in the working position of the machine, the position of the carrier frame (4) with respect to the coupling element (3).

2. An agricultural machine as claimed in claim 1, characterized in that, in the working position of the machine, the locking means can fix the position of the lower supporting beams (7) with respect to the coupling element (3).

3. An agricultural machine as claimed in claim 1 or 2, characterized in that in the pivot point (8) of each of the lower supporting beams (7) with respect to the coupling element (3) there is provided a supporting element (9) which is also capable of pivoting relative to this coupling element (3), and that an operating cylinder (10) is provided between each of the lower supporting beams (7) and a relevant supporting element (9).

4. An agricultural machine as claimed in claim 3, characterized in that, in the working position of the machine, the lower supporting beams (7) and the supporting elements (9) can be adjusted by means of the operating cylinders (10) into a position wherein at least the lower supporting beams (7) are located at a given angular spacing from stops (11) which are in a fixed relationship relative to the coupling element (3).

5. An agricultural machine as claimed in claim 3 or 4, characterized in that, in a work interrupting position of the machine, the lower supporting beams (7) and the supporting elements (9) are pulled upwardly by means of the operating cylinders (10) against stops (11) which are in a fixed position with respect to the coupling element (3).

6. An agricultural machine as claimed in any one of the preceding claims, characterized in that the locking means include a locking hook (14) for fixing the angular position of a lower supporting beam (7) with respect to the coupling element (3), in the working position of the machine.

7. An agricultural machine as claimed in claim 6, characterized in that the locking hook (14) fixes the angular position between a lower supporting beam (7) and a stop (11) which is in a fixed position with respect to the coupling element (3).

8. An agricultural machine as claimed in claim 6 or 7, characterized in that the locking hook (14) is secured in a point defined with respect to a lower supporting beam (7) and remote from the pivot point (8) of the lower supporting beam (7) relative to the coupling element (3).

9. An agricultural machine as claimed in claim 6, 7 or 8, characterized in that the locking hook (14) is arranged pivotably in that point where the operating cylinder (10) is attached pivotably to a relevant lower supporting beam (7).

10. An agricultural machine as claimed in any one of claims 6 to 9, characterized in that the locking hook (14) is adjustable to a plurality of positions, more specifically three positions, relative to the operating cylinder (10).

11. An agricultural machine as claimed in claim 10, characterized in that the operating cylinder (10) is provided with a raised portion (19) and, in the work interrupting position, can be locked by inserting a pin (21) through a first hole (20) in the locking hook (14) and behind the raised portion (19).

12. An agricultural machine as claimed in claim 10 or 11, characterized in that, in the working position, the locking hook (14) extends in the longitudinal direction of the operating cylinder (10) and is fixed in this position by means of a supporting plate (22) provided at the lower side of the locking hook (14) and a pin (21) to be inserted through a second hole (23) in the locking hook (14) above the operating cylinder (10).

13. An agricultural machine as claimed in claim 10, 11 or 12, characterized in that, in the position wherein the locking hook (14) fixes the angular position between a lower supporting beam (7) and a stop (11) which is in a fixed position relative to the coupling element (3), the locking hook (14) can be fixed with respect to the operating cylinder (10) by means of a pin (21) to be inserted through a third hole (24) provided at a higher level than the second hole (23) in the locking hook (14) above the operating cylinder (10).

14. An agricultural machine as claimed in any one of the preceding claims, characterized in that the quadrangular pivotal structure (5) comprises only one upper supporting beam (6) and two lower supporting beams (7).

15. An agricultural machine as claimed in any one of the preceding claims, characterized in that the combination of the coupling element (3), the quadrangular pivotal structure (5) and the carrier frame (4) with the machine (2) can be coupled at the front side of a tractor as well as at the front side of a wheel-carried frame drawn thereby.

FIG.1

FIG.2

FIG.3

FIG.4

FIG.5

FIG.6

FIG.7

FIG. 8

Fig.9

FIG.10

FIG.11

FIG.12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,A,D | EP-A-0 343 699   (VAN DER LELY)<br>* column 5, line 16 - column 8, line 22; figures 1, 2 &<br>NL-A-8801040 * | 1-5,14,15 | A 01 B 59/048<br>A 01 D 67/00<br>A 01 D 43/10 |
| A | US-A-4 724 661   (BLAKESLEE)<br>* column 3, line 38 - column 4, line 66 * | 1,15 | |
| A | GB-A-2 052 237   (KUHN)<br>* claim 1; figure 1 * | 1,15 | |
| A | FR-A-2 613 577   (FENET)<br>* page 3, line 16 - page 4, line 6; claim 1 * | 14,15 | |
| A | GB-A-2 079 126   (CLAAS) | | |
| A | US-A-4 081 946   (EHRHART) | | |
| A | US-A-3 577 713   (MCCARTY) | | |
| A | DE-A-2 332 726   (INTERNATIONAL HARVESTER) | | |
| A | DE-U-8 701 093   (KRONE) | | |
| A | FR-A-2 386 246   (SPERRY RAND) | | |
| A | EP-A-0 116 662   (KLOECKNER-HUMBOLDT-DEUTZ) | | |

**TECHNICAL FIELDS SEARCHED (Int. Cl.5)**

A 01 D
A 01 B

The present search report has been drawn up for all claims

| Place of search | Date of completion of search | Examiner |
|---|---|---|
| The Hague | 29 January 91 | DE LAMEILLIEURE D. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document